# EUROPÄISCHE PATENTSCHRIFT

(11) **EP 0 734 838 B1**
(45) Veröffentlichungstag und Bekanntmachung des Hinweises auf die Patenterteilung: **28.02.2001**
(21) Anmeldenummer: 95810213.9
(22) Anmeldetag: 30.03.1995
(51) Int. Cl.: B29C 51/30, B29C 51/08, B65D 8/22, B65D 77/20, B65D 47/08

(54) **Verfahren und Vorrichtung zur Herstellung eines flaschenförmigen Behälters durch Tiefziehen und damit hergestellter Behälter**
Method and apparatus for manufacturing a bottle shaped container by deep drawing and manufactured container
Procédé et dispositif pour la fabrication d'un récipient en forme de bouteille par embouttissage et récipient produit

(43) Veröffentlichungstag der Anmeldung: 02.10.1996
(73) Patentinhaber: Sandherr Packungen AG, 9444 Diepoldsau (CH)
(72) Erfinder: Schellenberg, Walter, CH-9444 Diepoldsau (CH)
(74) Vertreter: Quehl, Horst Max, Dipl.-Ing.

(56) Entgegenhaltungen:
- WO-A-94/08860
- FR-A- 2 088 107
- FR-A- 2 512 385
- GB-A- 2 041 891
- US-A- 4 025 275
- US-A- 4 059 380
- US-A- 4 369 901

## Beschreibung

Die Erfindung betrifft ein Verfahren zur Herstellung eines flaschenförmigen Behälters durch Tiefziehen entsprechend dem Oberbegriff des Patentanspruchs 1, eine Vorrichtung zur Durchführung des Verfahrens und einen in Anwendung des Verfahrens hergestellten Behälter.

Ein Verfahren der genannten Art ist bekannt durch die CH-A-352 279. Dieses Verfahren veranschaulicht, dass es bisher nicht möglich war, den Behältermantel eines einer Flaschenform entsprechenden schlanken Behälters in einem Stück in einer Tiefziehform herzustellen. Hierfür mussten zwei separat tiefgezogene Behälterteile in einem dritten Arbeitsgang entlang ihrer Flanschflächen miteinander verbunden werden, so dass der Behältermantel durch einen umlaufenden Flansch unterbrochen wird.

Da im Unterschied zu von im Blasverfahren hergestellten Kunststoffbehältern das Tiefziehen nur eine im Verhältnis zum Durchmesser geringe Tiefe des Behälters ermöglicht, wurde durch die BE-A-556 274 auch vorgeschlagen, einen flaschenförmigen Behälter aus zwei tiefgezogenen, schalenförmigen Hälften zu bilden, so dass er eine sich in Längsrichtung des flaschenförmigen Behälters erstreckende Flanschverbindung aufweist. Diese hat den Nachteil, dass sie sich nicht mit zufriedenstellender Zuverlässig abdichten lässt. Ausserdem erfordert der Verlauf der Flanschverbindung bis zum Boden des Behälters, dass dort besondere konstruktive Massnahmen getroffen werden müssen, damit der Behälter eine senkrechte Stellposition einnehmen kann. Die durch die BE-A- 556 274 vorgeschlagene Massnahme, im Bodenbereich die Flanschverbindung nach innen zu verlegen, hat den Nachteil, dass die Behälterhälften eine Hinterschneidung aufweisen, die ihre Herstellung erschwert und ihre raumsparende, ineinandergestapelte Lagerung und Transport verhindert.

Der Erfindung liegt die Aufgabe zugrunde, ein Verfahren der eingangs genannten Art zufinden, das die Nachteile derartiger bekannter Verfahren vermeidet und das es ermöglicht, aus einer Folie einen stapelbaren und folglich schnell füllbaren, dünnwandigen und damit sehr leichten flaschenförmigen Behälter mit hoher Arbeitsgeschwindigkeit herzustellen.

Die Lösung der genannten Aufgabe erfolgt erfindungsgemäss aufgrund der kennzeichnenden Merkmale des Patentanspruchs 1. Für die Ausführung des Verfahrens wird eine Tiefziehform mit den Merkmalen des Patentanspruchs 6 vorgeschlagen. Ein mit Anwendung des erfindungsgemässen Verfahrens hergestellter, gefüllter tiefgezogener flaschenförmiger Kunststoffbehälter ist erfindungsgemäss gekennzeichnet durch die Merkmale des Patentanspruchs 7.

Durch das erfindungsgemässe Verfahren lassen sich auf einfache Weise Behälter herstellen, die zahlreiche vorteilhafte Eigenschaften aufweisen. Der bedeutsamste Vorteil besteht darin, dass die Behälterkörper vor dem Aufschweissen des Behälterbodens ineinander gestapelt vom Hersteller zum Abfüller transportiert werden können, so dass viel Transport- und Lagervolumen eingespart wird. Ausserdem lassen sich die Behälterkörper einfach und schnell durch ihre grosse Bodenöffnung füllen, bevor der Behälterboden aufgeschweisst wird, so dass das Füllen mehrbahnig erfolgen kann und keine herkömmliche Flaschenfüllanlage eingesetzt werden muss.

Der auf mittlerer Höhe umlaufende Absatz oder Wulst trägt ebenso wie der bodenseitige Flanschrand zur Steifigkeit des sehr dünnwandig herstellbaren Behälterkörpers bei. Ausserdem können Längsrillen oder eine mit einen Mantelabschnitt verbundene Papiermanschette den Behälterkörper versteifen. Durch seine Dünnwandigkeit ergeben sich erhebliche Materialeinsparungen sowie die Möglichkeit, den Behälter nach Gebrauch zusammengefaltet der Abfallentsorgung zuzuführen. Die vorzugsweise vorgesehene, versteifende Papiermanschette lässt sich zuvor entfernen, indem zuvor ein eingearbeiter Solltrennstreifen abgerissen wird.

Ein einfaches Oeffnen und Schliessen eines erfindungsgemässen Behälters wird durch eine auf den Behälterkopf aufsiegelbare Behälterkappe erreicht.

Vorteilhafte Ausgestaltungen der Erfindung sind den abhängigen Patentansprüchen sowie der folgenden Beschreibung anhand der Zeichnungen zu entnehmen. Es zeigt:
- Fig.1: die Tiefziehform mit in Anfangsposition angeordneter Tiefziehstempeleinheit,
- Fig.2: die Tiefziehform nach Fig.1 mit in eine erste Vorformstufe bewegter Tiefziehstempeleinheit,
- Fig.3: die Tiefziehform nach Fig.1 mit in eine zweite Vorformstufe bewegtem, umschlossenen Tiefziehstempel,
- Fig.4: eine Seitenansicht eines mit einer Papiermanschette ausgerüsteten Behälterkörpers nach seiner Entfernung aus der Tiefziehform,
- Fig.5: eine Aufsicht auf den Behälterkörper nach Fig.4,
- Fig.6: eine Seitenansicht von zwei ineinandergestapelten Behälterkörpern,
- Fig.7: eine Axialschnitt durch den Kopfbereich eines Behälterkörpers nach dem Aufsiegeln einer Behälterkappe,
- Fig.8: einen Axialschnitt durch die Behälterkappe nach Fig.7,
- Fig.9: eine Aufsicht auf die Behälterkappe nach Fig.8,
- Fig.10: ein im unteren Bereich im Schnitt dargestelltes Werkzeug für die Herstellung der Einschnitte in der Behälterkappe nach Fig.9,
- Fig.11: eine Seitenansicht eines fertiggestellten Behälters in Richtung zu dem Grifflappen der Behälterkappe,
- Fig.12: eine Aufsicht auf den Behälter nach Fig.11 mit schraffierter Darstellung eines Siegelbereichs zwischen der Behälterkappe und der Kopfwand des Behälters,
- Fig.13: eine Aufsicht auf den Behälter nach Fig.11, mit schraffierter Darstellung eines die Entleerungsöffnung umschliessenden Siegelbereichs,
- Fig.14: einen hälftig geschnitten dargestellten Behälter, mit Behälterkappe und angesiegelter, tiefgezogene Bodenwand und mit einer Entlüftungsöffnung in der Kopfwand,
- Fig.15: eine Aufsicht auf den Behälter nach Fig.14, mit schraffierter Darstellung eines die Entleerungsöffnung umschliessenden Siegelbereichs,
- Fig.16: eine weitere Ausführungsform eines Behälters in hälftig geschnittener Darstellung, mit Behälterkappe und einem Teil eines Siegelwerkzeuges,
- Fig.17: eine Aufsicht auf den Behälter nach Fig.16,
- Fig.18: eine Seitenansicht von zu einem Doppelpack miteinander verbundenen Behältern nach Fig.11,
- Fig.19: eine Ansicht gegen die Unterseite des Doppelpacks nach Fig.18,
- Fig.20: eine Seitenansicht von zu einem Viererpack miteinander verbundenen Behältern nach Fig.11 und
- Fig.21: eine Ansicht gegen die Unterseite des Viererpacks nach Fig.20,

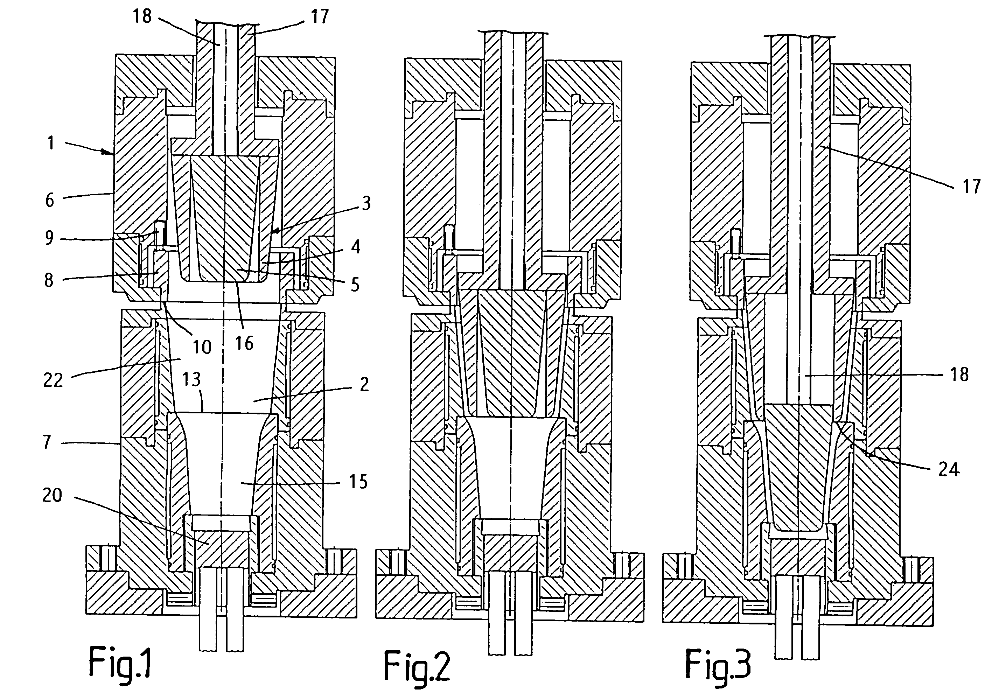

Der grundsätzliche Aufbau der in den Fig.1 bis 3 ohne tiefzuziehende Folie dargestellten Tiefziehform 1 ist an sich bekannt, neu sind jedoch die im Verhältnis zum Durchmesser grosse axiale Länge bzw. die Flaschenform des Formraumes 2 sowie die Tiefziehstempeleinheit 3, indem diese aus einem umschliessenden Tiefziehstempel 4 und einem umschlossenen Tiefziehstempel 5 besteht.

Fig.1 zeigt die Tiefziehform 1, nachdem ihr oberer Schliessteil 6 gegen ihren Formteil 7 bewegt wurde, so dass ihr ringförmiger Folienhalter 8 unter dem Druck einer zusammengepressten Druckfeder 9 am Oeffnungsrand 10 des Formraumes anliegt. In dieser Position wird beim Betrieb der Tiefziehform 1 eine tiefzuziehende Folie entlang eines Ringbereiches klemmend zwischen dem Folienhalter 8 und dem Oeffnungsrand 10 gehalten, der nach Fertigstellung des Behälterkörpers 11 und seiner Abtrennung vom ausserhalb dieses Ringbereiches liegenden Folienmaterial dessen Flanschrand 12 bildet.

In einer ersten Vorformstufe wird die Tiefziehstempeleinheit 3 von der Position nach Fig.1 in die Position nach Fig.2 und somit bis angenähert zur Hälfte der Längsabmessung des Formraumes 2, d.h. bis zu der Linie 13 in diesen hineinbewegt, so dass die Folie durch den umschliessenden Tiefziehstempel 4 entsprechend weit tiefgezogen wird. Unmittelbar danach bewegt sich in einer zweiten Vorformstufe der umschlossene Tiefziehstempel 5 von der Position nach Fig.2 in die Position nach Fig.3 und somit aus dem umschliessenden Tiefziehstempel 4 heraus und übernimmt das weitere Tiefziehen in den unteren Bereich 15 des Formraumes 2 hinein, so dass ein zuvor an der Stirnfläche 16 der Tiefziehstempeleinheit 3 anliegender Teil der Folie tiefgezogen wird. Die abschliesende Formung erfolgt durch Pressluft, die von oben an der Tiefziehstempeleinheit 3 vorbei in den vorgeformten Behälterkörper einströmt, so dass dieser gegen die Innenfläche des Formraumes 2 gepresst wird und dessen Form einnimmt.

Die selbständige Bewegung des umschlossenen Tiefziehstempels 5 in die Position nach Fig.3 wird durch eine rohrförmige Kolbenstange 17 des umschliessenden Tiefziehstempels 4 möglich, durch die sich die Kolbenstange 18 des inneren Tiefziehstempels 5 erstreckt.

Die Entformung des tiefgezogenen Behälterkörpers 11 erfolgt durch Abwärtsbewegung des Formteiles 7, so dass sich der die Kopfwand 19 formende Bodenteil 20 der Tiefziehform in den Formraum 2 hineinbewegt und den Behälterkörper 11 ausstösst.

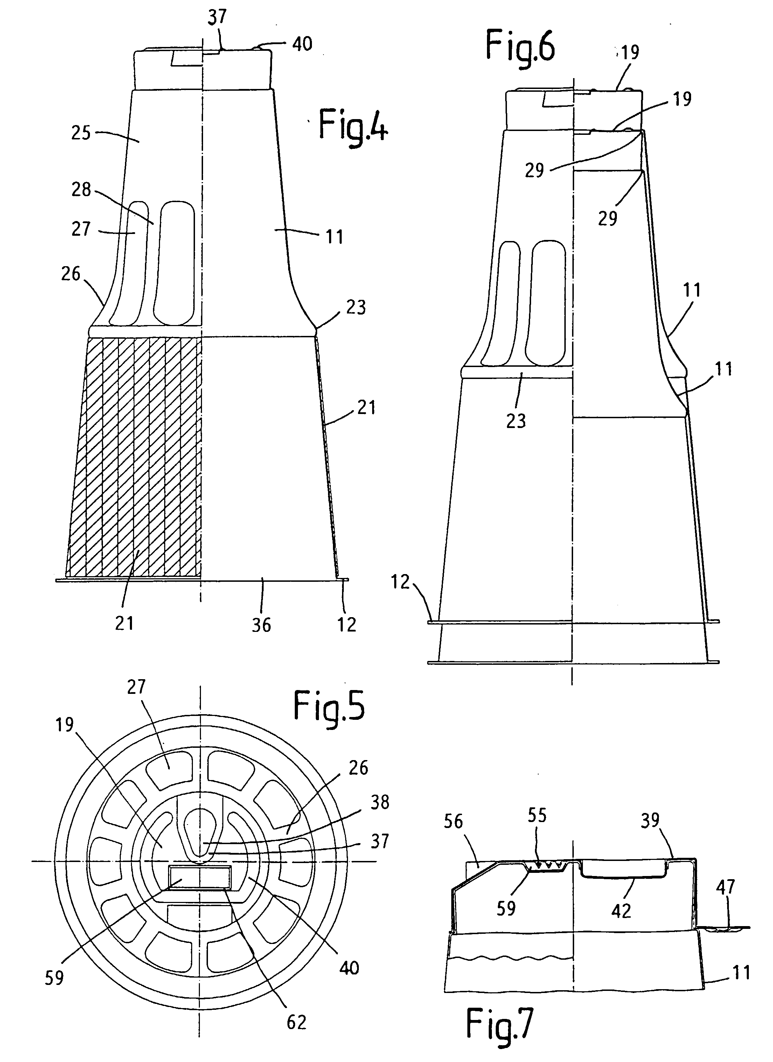

Für die Herstellung des Behälterkörpers 11 mit einer verstärkenden Papiermanschette 21 nach Fig.4 wurde vor der Zuführung der Folie zur Tiefziehform in diese eine Papiermanschette 21 eingelegt, die so geformt und bemessen ist, dass sie sich an die Wand des oberen Bereichs 22 des Formraumes 2 anlegt und beim Tiefziehformen unter dem Druck der Pressluft in engen, formschlüssigen Kontakt mit der den Behälterkörper 11 bildenden Folie gelangt. Die sich dabei durch den formschlüssigen Einschluss der unteren Kante der Papiermanschette 21 ergebende absatzförmige Ausformung der Folie erfolgt dabei vorzugsweise dort, wo sich ohnehin am Uebergang zwischen oberem und unterem Bereich 22, 15 des Formraumes 2 im Behälterkörper 11 eine umlaufende Rille 23 oder Absatz ergibt, die durch einen Absatz 24 zwischen umschliessendem und umschlossenen Tiefziehstempel 4,5 vorgeformt worden sind. Dieser ergibt sich nach Herausschieben des umschlossenen Tiefziehstempels 15 in die Position nach Fig. 3. Die nach aussen als Wulst wirkende Rille 23 trägt ebenfalls wesentlich zur Versteifung des sehr dünnwandig ausführbaren Behälterkörpers 11 bei, auch wenn dieser nicht entsprechend den Darstellungen der Fig.6,11,14 und 16 durch eine Papiermanschette 21 verstärkt ist. Die Ausrüstung des Behälterkörpers 11 mit einer Papiermanschette ist jedoch auch für die ästhetische und werbewirksame Gestaltung eines erfindungsgemässen Behälters vorzuziehen, da sie sich leicht bedrucken lässt.

Obwohl auch der im Durchmesser kleinere, obere Abschnitt 25 des Behältermantels durch eine zweite Papiermanschette verstärkt werden kann, ist es aufgrund der vorzugsweise vorgesehene Wölbung 26 am Uebergang zwischen den beiden kegelstumpfförmigen Bereichen des Behältermantels vorzuziehen, im oberen Abschnitt 25 des Behältermantels eine Wandprofilierung vorzusehen, die sowohl zur Verstärkung als auch zur vorteilhaften ästhetischen Gestaltung des Behälters beiträgt. Die Wandproflierung besteht beispielsweise aus in gleichmässigen Abstand in Umfangsrichtung nebeneinander angeordneten, nach innen gerichteten, in Behälterlängsrichtung verlaufenden, flachen Ausbuchtungen 27, so dass sich zwischen ihnen Rippen 28 ergeben, die den Behältermantel 11 verstärken.

Fig.6 veranschaulicht die raumsparende Stapelbarkeit von mehreren Behälterkörpern 11 ineinander. Um die Behälterkörper 11 zum Befüllen leicht aus ihren Stapeln entnehmen zu können, ist in ihrem Kopfbereich eine umlaufende Stapelschulter 29 eingeformt, indem der Behältermantel im obersten Wandbereich 31 zwischen der Kopfwand 30 und der Stapelschulter 29 zum übrigen Bereich des Behältermantels gegenkonisch geformt ist.

Der fertige Behälter 33 wird erst nach Füllen des Behälterkörpers 11 durch Aufsiegeln bzw. Aufschweissen einer leicht tiefgezogenen Bodenwand 34 oder einer ebenen Bodenwand 35 auf den Flanschrand 12 des Behälterkörpers 11 hergestellt, wobei die Bodenwand die grosse, hierbei nach oben gekehrte bodenseitige Füllöffnung 36 dicht verschliesst. Damit wäre der Behälter 33 fertiggestellt, falls es als ausreichend betrachtet wird, das Herstellen einer nicht wiederverschliessbaren Entleerungsöffnung dem Endverbraucher zu überlassen, der hierzu den Behälter 33 an einer beliebigen Stelle aufschneidet.

Vorzugsweise wird das Oeffnen des Behälters 33 durch eine einen Wiederverschluss ermöglichende Verschlusseinrichtung erleichtert. Zur Herstellung einer solchen Verschlusseinrichtung wird während der Herstellung des Behälterkörpers 11 durch Tiefziehen in seiner Kopfwand 19 ein durch eine innenseitige Rille aufgewölbter Randwulst 37 für eine Entleerungsöffnung 38 eingeformt und nach Ausstanzen der Entleerungsöffnung 38 auf den Behälterkopf eine Behälterkappe 39 aufgesiegelt.

Das Aufsiegeln der Behälterkappe 39 erfolgt entlang des Randwulstes 37 der Entleerungsöffnung 38 mit geringerer Festigkeit und ausserdem mit höherer Festigkeit entlang eines Wulstes 40, der sich parallel zum Kappenrand erstreckt und dabei eine für die Anordnung einer Verschlusslasche 41 vorgesehene Fläche auf drei Seiten umschliesst. Hierfür werden zwei Siegelwerkzeuge verwendet, die nach Aufsetzen der Behälterkappe 39 mit verschiedener Temperatur und verschiedenem Druck dort kurzzeitig aufgedrückt werden, wo unterhalb der dort ebenen Kappenwand der betreffende Wulst 37 bzw. 40 verläuft.

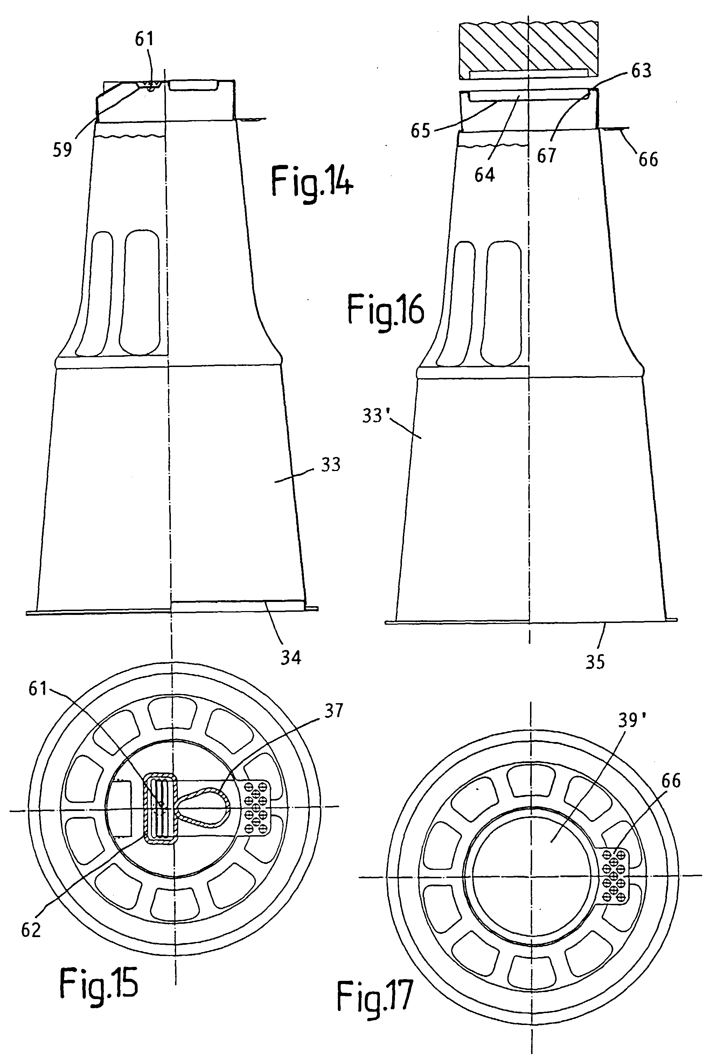

Ein Beispiel für die Ausbildung eines Siegelwerkzeuges ist im oberen Teil der Fig.16 gezeigt. Dieses dient der Aufsiegelung einer zweiten Ausführungsform einer Behälterkappe 39' bzw. eines Verschlussystems.

Der die Entleerungsöffnung überdeckende Kappenbereich bildet einen Teil einer Verschlusslasche 41, der beim Herstellen der Behälterkappe 39 durch Tiefziehen mit einer einen Verschussstopfen 42 bildenden Vertiefung versehen worden ist. Dabei bildet der Verschlussstopfen 42 mit dem die Entleerungsöffnung 38 umschliessenden Randwulst 37 ein gut dichtendes Verschlussystem, das gewährleistet, dass nach erstmaligem Oeffnen durch Hochziehen der Verschlusslasche 41 und Abpellen entlang der Siegelverbindung des Randwulstes 37 ein dichtes Wiederverschliessen möglich ist.

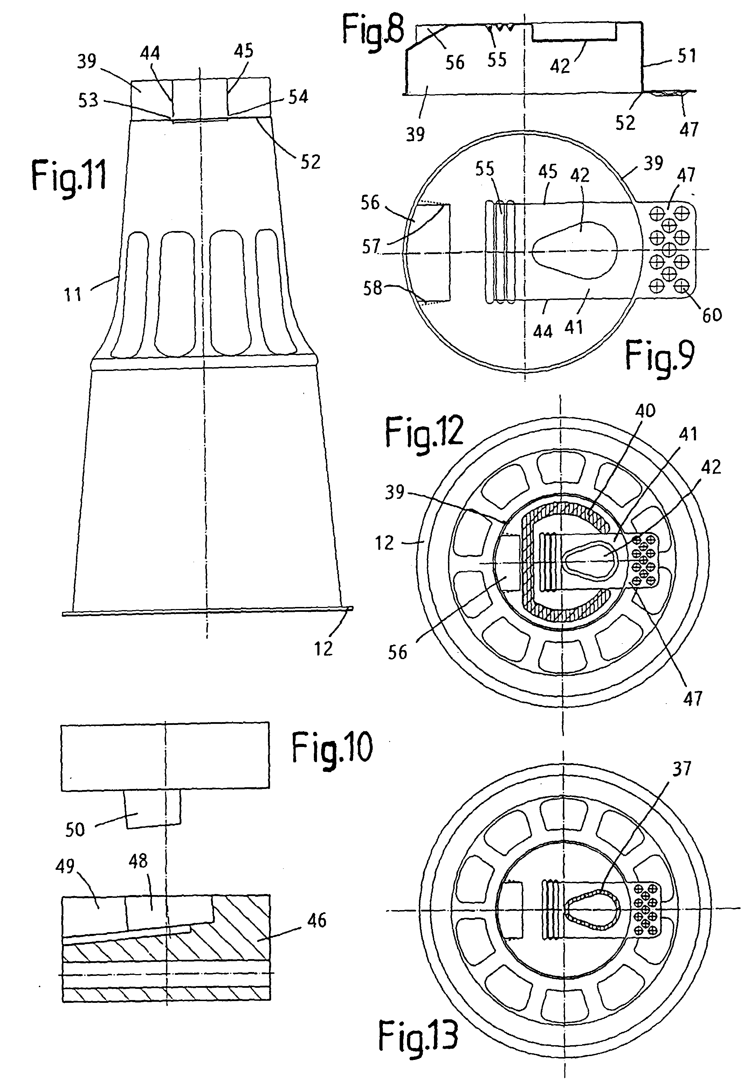

Die Verschlusslasche 41 wird durch Einbringen von zwei zueinander parallelen Schnitten 44 und 45 in die dünnwandige, tiefgezogene Behälterkappe 39 in einem Arbeitsgang mit Hilfe des zweiteiligen Schneidwerkzeuges nach Fig. 10 hergestellt. Vor dem Einsetzen der Behälterkappe 39 in den unteren Teil 46 des Schneidwerkzeuges wird diese nach dem Tiefziehen entlang ihres Umfanges und entlang der Kontur eines seitlich abstehenden Fingergriffes 47 der Verschlusslasche 41 ausgestanzt.

In dem Schneidwerkzeugteil 46 befindet sich eine Aufnahme 48 für die geneigte Anordnung der Behälterkappe 39 sowie eine Aussparung 49 für die Anordnung ihres Fingergriffes 47. Durch die geneigte Anordnung werden mit einer Schnittbewegung des Schnittstempels 50 in der Behälterkappe 40 die zwei die Verschlusslasche 41 auf einander gegenüberliegenden Seiten begrenzende Einschnitte 44 und 45 erzeugt, die sich zueinander parallel quer über die Behälterkappe 39 bis in ihren Mantelteil 51 erstrecken und dort mit geringem Abstand von der unteren umlaufenden Kante 52 enden, so dass dort zwei kurze, nichtdurchschnittene Wandteile 53,54 der Behälterkappe 40 verbleiben, die beim Aufreissen der Verschlusslasche 41 als Sollbruchverbindung zerrissen werden. Ihre Unversehrtheit garantiert, dass die Entleerungsöffnung 38 des Behälters 33 noch nicht geöffnet worden ist.

Auf der dem Fingergriff 47 gegenüberliegenden Seite ist in der Behälterkappe 39 eine Rastausnehmung 56 vorgesehen, deren Seitenwände 57,58 nach unten, entsprechend der Andeutung durch Strichlinien, leicht hinterschnitten verlaufen, so dass die Verschlusslasche 41 nach ihrem Zurückbiegen um 180° dort verrastet werden kann und sich bei der Entleerung des Behälters, z.B. durch Trinken, keine Behinderung durch die Verschlusslasche 41 ergeben kann.

Das Zurückbiegen der Verschlusslasche 41 in die Rastposition innerhalb der Rastausnehmung 56 wird durch mindestens eine und vorzugsweise zwei oder drei dicht nebeneinander quer zur Verschlusslasche 41 in ihr verlaufende Rillen 55 erleichtert, indem diese einen scharnierartig wirkenden Endbereich der Verschlusslasche 41 bilden. Die sich folglich dort ergebende, nach unten gerichtete Profilierung der Verschlusslasche 41 wird in einer entsprechend grossen Ausnehmung 59 der Kopfwand 19 des Behälterkörpers 11 aufgenommen, wie die Querschnittsdarstellung der Fig.7 veranschaulicht.

Der Fingergriff 47 hat zahlreiche beim Tiefziehen der Behälterkappe 39 hergestellte warzenförmige Vertiefungen 60, die seiner Griffigkeit dienen. Stattdessen kann ein Fingergriff beispielsweise auch ringförmig mit einer grosseren Ausstanzung als Ringlasche ausgeführt sein.

Fig.14 und Fig.15 zeigen eine Ausführungsform des Behälters mit einer neben der Entleerungsöffnung 38 angeordneten Belüftungsöffnung 61, die innerhalb der Ausnehmung 59 der Kopfwand 19 des Behälterkörpers 11 vorgesehen ist. Diese verhindert das Entstehen von Unterdruck im Behälter, wenn Flüssigkeit über die Entleerungsöffnung 38 z.B. durch Trinken entnommen wird. Für eine ausreichende Abdichtung vor dem erstmaligen Hochziehen der Verschlusslasche 41 setzt sich die die Entleerungsöffnung 38 umschliessende Siegelnaht entsprechend der Darstellung in Fig.15 um die Ausnehmung 59 herum fort, indem dort ebenfalls durch eine innere Rille in der Kopfwand 19 ein Randwulst 62 ausgebildet ist.

Fig.16 und Fig.17 zeigen einen Behälter der sich von denjenigen der Ausführungsbeispiele nach Fig.4 bis Fig.15 durch eine andere Ausbildung der Kopfbereiches und der Verschlusseinrichtung unterscheidet. Dabei ist die Kopfwand soweit ausgeschnitten, dass nur noch ein Randwulst 63 verbleibt, der eine kreisrunde, verhältnismässig grosse Entleerungsöffnung 64 umschliesst. Der Verschluss erfolgt durch ein auf den Randwulst 63 aufgesiegeltes, tiefgezogenes Folienstück 65 mit seitlich abstehendem Fingergriff 66. Der tiefgezogene Bereich des Folienstückes ist nach Art eines Deckels in die Entleerungsöffnung eingesetzt und liegt dabei dichtend an der Innenfläche 67 des Randwulstes 63 an, so dass nach Lösen der Siegelverbindung ein Wiederverschluss möglich ist.

Auch bei dem Ausführungsbeispiel nach Fig.16 ist der Fingergriff 66 leicht biegbar, so dass er sich beim Ineinanderstapeln an den Behältermantel anlegt.

Es versteht sich, dass ein erfindungsgemässer, durch Tiefziehen flaschenförmig hergestellter Behälter auch mit anderen Längs-und Querschnittsformen des Behältermantels hergestellt sein kann. Beispielsweise sind auch mehreckige Querschnittsformen mit abgerundeten Eckbereichen möglich. Grundsätzlich ist jedoch eine gut ineinanderstapelbare und trotzdem flaschenartige Form des Behälterkörpers 11 gegeben, wie sie durch Tiefziehen herstellbar ist.

Als Folienmaterial für die Herstellung eines erfindungsgemässen Behälters eignet sich jede tiefziebare Folie, wie z.B. aus Polyäthylen, Polypropylen, Polystyrol. PET, u.a., die auch mehrschichtig aufgebaut sein kann. Die zu einem Behälter verformte Folie hat beispielsweise vor dem Tiefziehen eine Dicke von 1,7 mm und ist nach dem Tiefziehen im Flanschrand nur noch ca. 0,6 mm und im Behältermantel nur noch 0,2 mm dick.

Falls eine Wiederverschliessbarkeit des flaschenförmigen Behälters nicht Bedingung ist, kann eine in der Kopfwand 19 vorgesehene Entleerungsöffnung 38 auch dadurch verschlossen werden, dass eine aus einer Aluminiumfolie tiefgezogene Behälterkappe aufgesiegelt wird. Das einmalige Oeffnen erfolgt dann durch Entfernen der Behälterkappe, indem diese entlang einer Solltrennlinie aufgerissen und entlang der Siegelverbindung abgelöst wird.

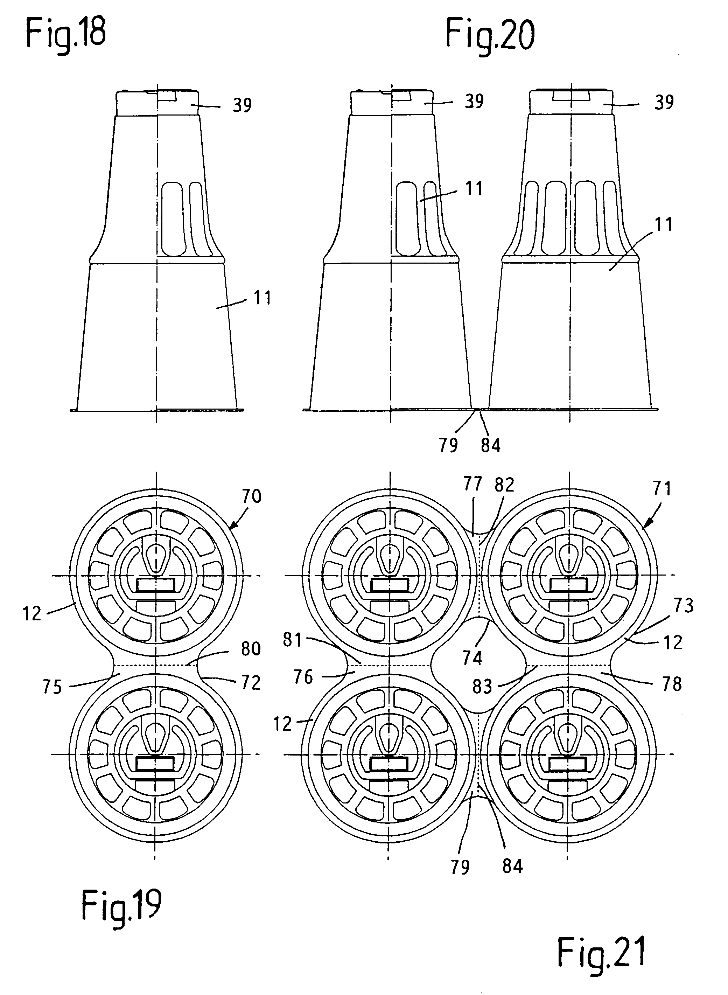

Die Herstellung der Behälters durch Tiefziehen ermöglicht auch auf einfache, an sich bekannte Weise deren Verbindung zu einem Mehrfachpack. Fig.18/19 zeigt als Ausführungsbeispiel die Verbindung zu einem Zweierpack, und in Fig.20/21 ist die Verbindung zu einem Viererpack 71 dargestellt. Eine solche Verbindung ergibt sich, indem nach dem Tiefziehen der Behälter in einer Mehrfachform diese nicht entlang ihres Flanschrandes 12 konzentrisch ausgeschnitten werden, sondern entlang einer gemeinsamen Aussenkontur 72 bzw. 73 und bei einem Viererpack 71 zusätzlich entlang einer gemeinsamen Innenkontur 74, so dass jeweils zwischen zwei benachbarten Behältern eine Verbindungslasche 75-79 verbleibt. Eine jeweils in den Verbindungslaschen 75-79 eingedrückte Kerblinie 80-84 bildet eine Solltrennlinie, so dass der Verbraucher einen Behälter aus dem Pack 70 oder 71 abtrennen kann.

## Patentansprüche

1. Verfahren zur Herstellung eines flaschenförmigen Behälters durch Tiefziehen, indem eine Folie entlang eines nach Ausstanzen einen Behälterflansch bildenden Randbereiches oberhalb einer Form (7) klemmend gehalten, durch Tiefziehen mittels eines kolbenartig bewegten Tiefziehstempels (4,5) in eine Form hinein vorgeformt und anschliessend in dieser Form durch Pressluft fertiggeformt wird, dadurch gekennzeichnet, dass das Vorformen mittels des kolbenartig bewegten Tiefziehstempels mindestens zweistufig in einen sich flaschenförmig in Richtung der Tiefziehbewegung verjüngenden Formraum (2) hinein ausgeführt wird, wobei in der ersten Stufe die Vorformung durch eine Tiefziehstempeleinheit (3) erfolgt, die aus einem umschliessenden (4) und einem umschlossenen (5) Tiefziehstempel besteht und in der zweiten Stufe die Vorformung durch den zuvor umschlossenen Tiehziehstempel (5) fortgesetzt wird, indem dieser bis zum untersten Bereich des flaschenförmigen Formraumes (2) aus dem umschliessenden Tiefziehstempel (4) herausbewegt wird.

2. Verfahren nach Anspruch 1, dadurch gekennzeichnet, dass in einem ausserhalb der Tiefziehform erfolgenden Verfahrensschritt an den Behälterflansch (12) ein den Behälterboden (34,35) bildender Behälterteil angeschweisst wird.

3. Verfahren nach Anspruch 2, dadurch gekennzeichnet, dass in die obere, dem Behälterflansch (12) gegenüberliegende Kopfwand (19) des tiefgezogenen, flaschenförmigen Behälterkörpers (11) eine Entleerungsöffnung (38) eingeschnitten wird, und dass anschliessend auf den Behälterkopf eine durch Tiefziehen hergestellte Behälterkappe (39) aufgesiegelt wird, in die zuvor Einschnitte (44,45) eingebracht worden sind, so dass diese eine die Entleerungsöffnung (38) überdeckende Verschlusslasche (41) begrenzen.

4. Verfahren nach Anspruch 3, dadurch gekennzeichnet, dass in der Behälterkappe (39) zwei einander gegenüberliegende Einschnitte (44,45) vorgesehen werden, die sich bis in den Mantelteil (51) der Behälterkappe (39) erstrecken, indem die Kappe (39) in einer Schnittform (46) in Schräglage relativ zu der Schnittbewegung eines Schnittstempels (50) gehalten wird.

5. Verfahren nach Anspruch 1, dadurch gekennzeichnet, dass in die Tiefziehform (7) mindestens eine sich an die Formwand anlegende Papiermanschette (21) eingelegt wird, die mit ihrem im Durchmesser kleineren Ende an eine in der Formwand vorgesehene, umlaufende Rille oder einen Absatz (13) angrenzt und die Folie durch den Druck der Pressluft formschlüssig mit ihr verbunden wird, indem ein durch diese Rille oder diesen Absatz (13) in der Behälterwand geformter Wulst (23) an der Kante der Papiermanschette (21) zur Anlage gebracht wird.

6. Tiefziehform für die Ausführung des Verfahrens nach Anspruch 1, dadurch gekennzeichnet, dass der Formraum (2) sich flaschenförmig verjüngt und eine die Tiefziehbewegung ausführende Tiefziehstempeleinheit (3) aus einem umschliessenden (4) und einem umschlossenen (5) Tiefziehstempel besteht, wobei der umschliessende Tiefziehstempel (4) kolbenartig an einer rohrförmigen Schubstange (17) gehalten ist, die eine den umschlossenen Tiefziehstempel (5) haltende Schubstange (18) umschliesst.

7. Tiefgezogener, gefüllter, flaschenförmiger Kunststoffbehälter, hergestellt in Anwendung des Verfahrens nach Anspruch 1, dadurch gekennzeichnet, dass der Behältermantel in dem mittleren Teil seiner Längserstreckung einen umlaufenden Absatz oder einen umlaufenden Wulst (23) aufweist, die ihn in einen unteren und oberen Abschnitt (21,25) unterteilen, die sich beide nach oben verjüngen, wobei der untere Abschnitt (21) nach unten durch einen quer zur Behälterlängsachse verlaufenden Flanschrand (12) begrenzt ist und der Behälterboden (34,35) an ihm angeschweisst ist, und dass der Behälterkopf eine Behälterkappe (39) aufweist.

8. Kunststoffbehälter nach Anspruch 7, dadurch gekennzeichnet, dass seine Höhe angenähert dem Zweifachen seiner grössten inneren Querabmessung entspricht.

9. Kunststoffbehälter nach Anspruch 7, dadurch gekennzeichnet, dass zumindest der untere Abschnitt des Behältermantels durch eine formschlüssig mit ihm verbundene Papiermanschette (21) versteift ist, indem ein umlaufender Wulst (23) des Behältermantels oder ein umlaufender Absatz an der im Durchmesser kleineren Kante der Papiermanschette (21) eng anliegt.

10. Kunststoffbehälter nach Anspruch 7, dadurch gekennzeichnet, dass der obere Abschnitt (25) des Behältermantels auf seiner Innenseite zahlreiche in Behälterlängsrichtung verlaufende Einbuchtungen (27) aufweist, so dass zwischen ihnen nach aussen gerichtete Verstärkungsrippen (28) vorhanden sind.

11. Kunststoffbehälter nach Anspruch 7, dadurch gekennzeichnet, dass in der oberen, dem Behälterflansch (12) gegenüberliegenden Kopfwand (19) des Behälters (33) eine Entleerungsöffnung (38) vorgesehen ist, die durch einen Bereich (42) einer auf den Behälterkopf aufgesiegelten Behälterkappe (39) verschlossen ist, wobei dieser Bereich durch einen in Form eines Verschlussstopfens tiefgezogenen Teil (42) einer einen Fingergriff (47) aufweisenden Verschlusslasche (41) gebildet ist, die durch Einschnitte (44,45) in der Behälterkappe (39) begrenzt ist.

12. Kunststoffbehälter nach Anspruch 11, dadurch gekennzeichnet, dass sich die Verschlusslasche (41) bis über den Mantelteil (51) der Behälterkappe (39) erstreckt, wobei die Verschlusslasche (41) über mindestens eine seitlich von ihr angeordnete Sollbruchstelle (53,54) mit der Behälterkappe (39) verbunden ist.

13. Kunststoffbehälter nach Anspruch 11, dadurch gekennzeichnet, dass die Entleerungsöffnung (38) von einem nach oben gerichteten, durch eine in die Kopfwand (19) eingeformte Rille gebildeten Randwulst (37) umschlossen ist, entlang dem eine abdichtende Siegelverbindung mit der Behälterkappe (39) verläuft.

14. Kunststoffbehälter nach Anspruch 13, dadurch gekennzeichnet, dass zusätzlich zu dem die Entleerungsöffnung (38) umschliessenden Wulst (37) in der Kopfwand (19) mindestens ein in einer Ebene verlaufender Wulst (40) vorgesehen ist, der eine versteifte Fläche für eine Siegelverbindung mit der Behälterkappe (39) bildet.

15. Kunststoffbehälter nach Anspruch 14, dadurch gekennzeichnet, dass die Siegelverbindung mit dem zusätzlichen Wulst (40) fester ausgeführt ist als diejenige mit dem Randwulst (37) der Entleerungsöffnung (38).

16. Kunststoffbehälter nach Anspruch 11, dadurch gekennzeichnet, dass in der Kopfwand (19) des Behälters (33) zusätzlich zu einer Entleerungsöffnung (38) eine Belüftungsöffnung (61) vorgesehen ist, die gemeinsam mit der Entleerungsöffnung (38) durch die Verschlusslasche (41) verschlossen ist.

17. Kunststoffbehälter nach Anspruch 11, dadurch gekennzeichnet, dass die untere Kante (52) des Mantelteils (51) der Behälterkappe (39) an einen nach innen gerichteten Absatz (29) des Kunststoffbehälters (33) angrenzt, wobei dieser Absatz (29) eine Stapelschulter für die Distanzierung von ineinandergestapelten Behälterteilen bildet.

18. Kunststoffbehälter nach Anspruch 7, dadurch gekennzeichnet, dass mehrere gleichartige Behälter zu einem Mehrfachpack (70, 71) miteinander verbunden sind, indem ihre Flanschränder (12) über jeweils eine Verbindungslasche (75-79) ineinander übergehen, wobei in der jeweiligen Verbindungslasche (75-79) eine Solltrennlinie (80-84) vorgesehen ist.

19. Kunststoffbehälter nach Anspruch 7, dadurch gekennzeichnet, dass die Behälterkappe (39) an dem Behälterkopf angesiegelt ist und in ihr einander gegenüberliegende Einschnitte (44,45) vorgesehen sind, so dass diese eine quer über die Behälterkappe (39) und über eine Entleerungsöffnung (38) des Behälterkörpers (11) sich erstreckende Verschlusslasche (41) begrenzen, wobei sich in der Verschlusslasche (41) ein tiefgezogener Verschlussstopfen (42) befindet und die Verschlusslasche (41) an ihrem freien Ende einen Fingergriff (47) aufweist, der sich von dem unteren Rand (52) des Mantelteils (51) der Behälterkappe (39) wegerstreckt.

20. Kunststoffbehälter nach Anspruch 19, dadurch gekennzeichnet, dass an dem dem Fingergriff (47) gegenüberliegenden Ende der Verschlusslasche (41) mindestens eine Querrille (55) eingeformt ist.

21. Kunststoffbehälter nach Anspruch 19, dadurch gekennzeichnet, dass sich in einem oberen, dem Fingergriff (47) gegenüberliegenden Randbereich der Behälterkappe (39) eine Rastausnehmung (56) befindet, die für die Einrastung der Verschlusslasche (41) in einer um 180° zurückgeschwenkten Freigabeposition bestimmt ist.

## Claims

1. Process for producing a bottle-shaped container by deep drawing, in that a film is held in clamping manner above a mould (7) along a marginal area forming a container flange following blanking, is preshaped into a mould by deep drawing by means of a moulding body (4, 5) moved in piston-like manner and is subsequently finely shaped in said mould by compressed air, wherein preshaping by means of the moulding body moved in piston-like manner takes place in at least two stages in a mould cavity (2) tapering in bottle-shaped manner in the deep drawing movement direction, in which in the first stage preshaping takes place through a moulding body unit (3) comprising a surrounding (4) and a surrounded (5) moulding body and in the second stage preshaping is continued through the previously surrounded moulding body (5), in that the latter is moved out of the surrounding moulding body (4) into the bottom area of the bottle-shaped mould cavity (2).

2. Process according to claim 1, wherein in a process step taking place outside the deep drawing mould, a container part forming the container bottom (34, 35) is welded to the container flange (12).

3. Process according to claim 2, wherein an emptying opening (38) is cut into the upper top wall (19), facing the container flange (12), of the deep drawn, bottle-shaped container body (11) and subsequently on the container top is sealed a container cap (39) produced by deep drawing in which beforehand indentations (44, 45) have been made, so that they define a closing tongue (41) covering the emptying opening (38).

4. Process according to claim 3, wherein in the container cap (39) are provided two facing indentations (44, 45) extending into the jacket part (51) of the container cap (39), in that the cap (39) is held in an inclined positionin a die (46) relative to the cutting movement of a cutting punch (50).

5. Process according to claim 1, wherein in the deep drawing mould (7) is placed at least one paper sleeve (21) engaging on the mould wall and which with its smaller diameter end is adjacent to a circumferential groove or a shoulder (13) provided in the mould wall and the film is connected thereto in positive manner by the pressure of the compressed air, in that a bead (23) formed in the container wall through said groove or said shoulder (13) is brought into engagement with the edge of the paper sleeve (21).

6. Deep drawing mould for performing the process according to claim 1, wherein the mould cavity (2) tapers in bottle-shaped manner and a moulding body unit (3) performing the deep drawing movement comprises a surrounding (4) and a surrounded (5) moulding body, the surrounding moulding body (4) being held in piston-like manner on a tubular push rod, which surrounds the push rod (18)holding the surrounded moulding body (5).

7. Deep drawn, filled, bottle-shaped plastic container, produced by applying the process according to claim 1, wherein the container jacket has in the central part of its longitudinal extension a circumferential shoulder or bead (23), which subdivides it into a lower and an upper portion (21, 25), both of which taper upwards, the lower portion (21) being downwardly bounded by a flange edge (12) running transversely to the container longitudinal axis and the container bottom (34, 35) is welded thereto.

8. Plastic container according to claim 7, wherein its height is approximately twice its maximum internal transverse dimension.

9. Plastic container according to claim 7, wherein at least the lower portion of the container jacket is stiffened by a paper sleeve (21) connected positively thereto, in that a circumferential bead (23) of the container jacket or a circumferential shoulder engages closely on the smaller diameter edge of the paper sleeve (21).

10. Plastic container according to claim 7, wherein the upper portion (25) of the container jacket has on its inside numerous bulges (27) running in the container longitudinal direction, so that between them are provided outwardly directed reinforcing ribs (28).

11. Plastic container according to claim 7, wherein in the upper top wall (19) of the container (33) facing the container flange (12) is provided an emptying opening (38), which is closed by an area (42) of a container cap (39) sealed onto the container top, said area being formed by a part (42), deep drawn into the form of a sealing plug, of a closing tongue (41) having a finger grip (47) and which is bounded by indentations (44, 45) in the container cap (39).

12. Plastic container according to claim 11, wherein the closing tongue (41) extends over and beyond the jacket part (51) of the container cap (39), the closing tongue (41) being connected by means of at least one predetermined breaking point (53, 54), positioned laterally thereof, to the container cap (39).

13. Plastic container according to claim 11, wherein the emptying opening (38) is surrounded by an upwardly directed marginal bead (37) formed by a groove in the top wall (19) and along which runs a sealing connection with the container cap (39).

14. Plastic container according to claim 13, wherein in addition to the bead (37) surrounding the emptying opening (38) in the top wall (19) is provided at least one bead (40) located in one plane and which forms a reinforced surface for a sealing connection with the container cap (39).

15. Plastic container according to claim 14, wherein the sealing connection with the additional bead (40) is stronger than that with the marginal bead (37) of the emptying opening (38).

16. Plastic container according to claim 11, wherein, in addition to an emptying opening (38), in the top wall (19) of the container (33) is provided a ventilating opening (61), which is closed together with the emptying opening (38)by the closing tongue (41).

17. Plastic container according to claim 11, wherein the lower edge (52) of the jacket part (51) of the container cap (39) is adjacent to an inwardly directed shoulder (29) of the plastic container (33), said shoulder (29) forming a stacking shoulder for the spacing of stacked container parts.

18. Plastic container according to claim 7, wherein several identical containers are interconnected to form a multiple pack (70, 71), in that their flange edges (12) pass into one another by means of in each case one connecting tab (75-79), a predetermined separation line (80-84) being provided in the connecting tab (75-79).

19. Plastic container according to claim 7, wherein the container cap is sealed on the container top of the container and is provided with facing indentations (44, 45), so that the latter bound a closing tongue (41) extending transversely over the container cap (39) and intended for placing over an emptying opening (38) of the container body (11), the closing tongue (41) containing a deep drawn sealing plug (42) and the closing tongue (41) has on its free end a finger grip (47) extending away from the lower edge (52) of the jacket part (51) of the container cap (39).

20. Plastic container according to claim 19, wherein at least one transverse groove (55) is made in the end opposite to the finger grip (47) of the closing tongue (41).

21. Plastic container according to claim 19, wherein in an upper marginal area of the container cap (39) opposite to the finger grip (47) is provided a locking recess (56), which is intended for locking the closing tongue (41) in a release position pivoted back by 180°.

## Revendications

1. Procédé pour la fabrication d'un récipient en forme de bouteille par emboutissage profond, dans lequel une feuille est maintenue serrée au-dessus d'un moule (7) le long d'une zone de bord formant une bride après le découpage, préformée dans le moule par emboutissage profond au moyen d'un poinçon d'emboutissage (4, 5) déplacé comme un piston puis formée définitivement dans ce moule par de l'air comprimé, caractérisé en ce que le préformage au moyen du poinçon d'emboutissage déplacé comme un piston est réalisé en deux temps dans un espace de formage (2) se rétrécissant en forme de bouteille dans le sens du mouvement d'emboutissage, le préformage étant réalisé dans le premier temps par une unité de poinçon d'emboutissage (3) composée d'un poinçon d'emboutissage enveloppant (4) et d'un autre enveloppé (5) et le préformage étant poursuivi dans le deuxième temps par le poinçon d'emboutissage qui était enveloppé (5) et qui sort du poinçon d'emboutissage enveloppant (4) pour pénétrer dans la partie inférieure de l'espace de formage (2) en forme de bouteille.

2. Procédé selon la revendication 1, caractérisé en ce que dans une étape de procédé qui se déroule à l'extérieur du moule d'emboutissage, une partie de récipient formant un fond de récipient (34, 35) est soudée sur la bride du récipient (12).

3. Procédé selon la revendication 2, caractérisé en ce qu'une ouverture d'écoulement (38) est découpée dans la paroi supérieure (19) du corps de récipient embouti en forme de bouteille (11) faisant face à la bride de récipient (12), et en ce qu'un opercule de récipient (39) fabriqué par emboutissage est ensuite soudé sur le sommet du récipient après que des entailles (44, 45) y ont été ménagées pour délimiter une patte de fermeture (41) recouvrant l'ouverture d'écoulement (38).

4. Procédé selon la revendication 3, caractérisé en ce qu'il est prévu dans l'opercule du récipient (39) deux entailles (44, 45) qui se font face et s'étendent jusque dans la partie d'enveloppe (51) de l'opercule du récipient (39), du fait que l'opercule (39) est maintenu dans un moule de découpe (46) dans une position oblique par rapport au mouvement de coupe d'un poinçon de découpe (50).

5. Procédé selon la revendication 1, caractérisé en ce qu'au moins un manchon en papier (21) s'appuyant sur la paroi du moule est déposé dans le moule d'emboutissage (7), lequel manchon est contigu à son extrémité de plus petit diamètre d'une nervure circonférentielle ou à un épaulement (13) prévus sur la paroi du moule, la feuille venant de matière avec le manchon sous la pression de l'air comprimé par le fait qu'un bourrelet (23) formé par cette nervure ou cet épaulement (13) dans la paroi du récipient vient s'appuyer sur le bord du manchon en papier (21).

6. Moule d'emboutissage profond pour la mise en oeuvre du procédé selon la revendication 1, caractérisé en ce que l'espace de formage (2) se rétrécit en forme de bouteille et une unité de poinçon d'emboutissage (3) exécutant le mouvement d'emboutissage se compose d'un poinçon d'emboutissage enveloppant (4) et d'un autre enveloppé, le poinçon d'emboutissage enveloppant (4) étant maintenu à la manière d'un piston sur un poussoir (17) tubulaire, qui entoure un poussoir (18) maintenant le poinçon d'emboutissage enveloppé (5).

7. Récipient en plastique embouti en forme de bouteille et rempli, fabriqué par la mise en oeuvre du procédé selon la revendication 1, caractérisé en ce que son enveloppe présente dans la partie médiane de sa longueur un épaulement ou un bourrelet circonférentiel (23) qui le partage en une partie inférieure et une partie supérieure (21, 25) qui se rétrécissent toutes deux vers le haut, la partie inférieure (21) étant délimitée vers le bas par un bord de bride (12) perpendiculaire à l'axe longitudinal du récipient et étant soudée au fond du récipient (34, 35), et en ce que le sommet du récipient présente un opercule de récipient (39).

8. Récipient en plastique selon la revendication 7, caractérisé en ce que sa hauteur correspond approximativement au double de sa plus grande dimension transversale intérieure.

9. Récipient en plastique selon la revendication 7, caractérisé en ce que la partie intérieure de l'enveloppe du récipient, au moins, est raidie par un manchon de papier (21) réuni avec elle par le fait qu'un bourrelet circonférentiel (23) de l'enveloppe du récipient ou un épaulement circonférentiel repose étroitement sur le bord du manchon de papier (21) de plus petit diamètre.

10. Récipient en plastique selon la revendication 7, caractérisé en ce que la partie supérieure (25) de l'enveloppe du récipient présent sur sa face intérieure de nombreux creux (27) orientés dans le sens longitudinal du récipient, de sorte qu'il existe entre eux des nervures de renfort (28) orientées vers l'extérieur.

11. Récipient en plastique selon la revendication 7, caractérisé en ce qu'il est prévu dans la paroi supérieure (19) du récipient (33) faisant face à la bride du récipient (12) une ouverture d'écoulement (38) fermée par une zone (42) de l'opercule du récipient (39) soudé au sommet du récipient, cette zone étant formée par une partie emboutie en forme de bouchon (42) d'une patte de fermeture (41) présentant une bande de préhension (47), qui est délimitée par des entailles (44, 45) dans l'opercule du récipient (39).

12. Récipient en plastique selon la revendication 11, caractérisé en ce que la patte de fermeture (41) s'étend par-dessus la partie d'enveloppe (51) de l'opercule du récipient (39), la patte de fermeture (41) étant reliée avec l'opercule du récipient (39) par au moins un point de rupture (53, 54) disposé sur son côté.

13. Récipient en plastique selon la revendication 11, caractérisé en ce que l'ouverture d'écoulement (38) est entourée par un bourrelet circonférentiel (37) orienté vers le haut et formé par une nervure formée dans la paroi supérieure (19), le long de laquelle court une soudure étanche avec l'opercule du récipient (39).

14. Récipient en plastique selon la revendication 13, caractérisé en ce qu'outre le bourrelet (37) entourant l'ouverture d'écoulement (38) dans la paroi supérieure (19), il est prévu au moins un bourrelet (40) situé dans un plan, qui forme une surface raidie pour une liaison soudée avec l'opercule du récipient (39).

15. Récipient en plastique selon la revendication 14, caractérisé en ce que la soudure avec le bourrelet supplémentaire (40) est plus solide que celle du bourrelet marginal (37) de l'ouverture d'écoulement (38).

16. Récipient en plastique selon la revendication 11, caractérisé en ce qu'il est prévu dans la paroi supérieure (19) du récipient (33), outre une ouverture d'écoulement (38), une ouverture d'aération (61) fermée en même temps que l'ouverture d'écoulement (38) par la patte de fermeture (41).

17. Récipient en plastique selon la revendication 11, caractérisé en ce que le bord inférieur (52) de l'enveloppe (51) de l'opercule du récipient (39) est contigu à un épaulement (29) du récipient en plastique (33) orienté vers l'intérieur, qui forme un épaulement d'empilement pour espacer des parties de récipient empilées les unes dans les autres.

18. Récipient en plastique selon la revendication 7, caractérisé en ce que plusieurs récipients identiques peuvent être reliés entre eux pour former un pack multiple (70, 71) par le fait que leurs bords de bride (12) sont reliés chacun à une patte de liaison (75-79), une ligne de rupture (S0-84) étant prévue dans chaque patte de liaison (75-79).

19. Récipient en plastique selon la revendication 7, caractérisé en ce que l'opercule du récipient (39) est soudé sur le sommet du récipient et comporte des entailles (44, 45) se faisant face mutuellement de manière a délimiter une patte de fermeture (41) s'étendant transversalement par-dessus l'opercule du récipient (39) et l'ouverture d'écoulement (38) du corps du récipient, la patte de fermeture (41) comportant un bouchon (42) embouti et présentant à son extrémité libre une bande de préhension (47) qui s'écarte du bord inférieur (52) de la partie d'enveloppe (51) de l'opercule du récipient (39).

20. Récipient en plastique selon la revendication 19, caractérisé en ce qu'au moins une nervure transversale (55) est formée à l'extrémité de la patte de fermeture (41) opposée à la bande de préhension (47).

21. Récipient en plastique selon la revendication 19, caractérisé en ce qu'il existe dans une zone de bord supérieure de l'opercule du récipient (39) faisant face à la bande de préhension (47) un creux d'engagement (56) destiné à l'engagement de la patte de fermeture (41) dans une position de dégagement basculée à 180°.
